# EUROPEAN PATENT APPLICATION

(11) **EP 2 323 403 A1**
(43) Date of publication of application: **18.05.2011**
(21) Application number: 10011442.0
(22) Date of filing: 16.03.2007
(51) Int. Cl.: H04N 7/26

(54) **Scalable video coding/multiplexing compatible with non-scalable decoders**

(30) Priority: 16.03.2006 US 782807 P; 23.03.2006 US 785796 P; 23.02.2007 US 710183
(62) Divisional of application: 07251125.6
(71) Applicant: Apple Inc., Cupertino, CA 95014 (US)
(72) Inventor: Haskell, Barin Geoffry, Mountain View, CA 94040 (US); Singer, David William, San Francisco CA (US); Pun, Thomas, Kowloon (HK); Wu Hsi-Jung, San Jose, CA 95129 (US); Normile, James Oliver, Los Altos, CA 94024 (US)
(74) Representative: Lang, Johannes

(57) **Abstract**

Scalable video coding and multiplexing compatible with non-scalable decoders is disclosed. In some embodiments, video data is received and encoded in a manner that renders at least a base layer to be compatible with a non-scalable video encoding standard, including by assigning for at least the base layer default values to one or more scalability parameters. In some embodiments, video data is received and encoded to produce an encoded video data that includes a base layer that conforms to a non-scalable video encoding standard and one or more subordinate non-scalable layers, which subordinate non-scalable layers do not by themselves conform to the non-scalable video encoding standard but which can be combined with the base layer to produce a result that does conform to the non-scalable video encoding standard, such that the result can be decoded by a non-scalable decoder. An identification data identifying those portions of the encoded video data that are associated with a subordinate non-scalable layer is included in the encoded video data.

## Description

### CROSS REFERENCE TO OTHER APPLICATIONS

This application claims priority to U.S. Provisional Patent Application No. 60/782,807 (Attorney Docket No. P4226USP1) entitled SCALABLE VIDEO CODING/MULTIPLEXING COMPATIBLE WITH NON-SCALABLE DECODERS filed March 16, 2006, which is incorporated herein by reference for all purposes; and to U.S. Provisional Patent Application No. 60/785,796 (Attorney Docket No. P4226USP2) entitled SCALABLE VIDEO CODING/MULTIPLEXING COMPATIBLE WITH NON-SCALABLE DECODERS filed March 23, 2006, which is incorporated herein by reference for all purposes.

### BACKGROUND OF THE INVENTION

In a scalable video coding/multiplexing scheme, it is desirable that the socalled base layer be compatible with a non-scalable video coding standard, e.g., H.264. It is also desirable that any multiplexing of additional scalable layers be carried out in such a way that non-scalable video decoders, which have no knowledge of scalability, will ignore all scalable layers and only decode the base layer.

### BRIEF DESCRIPTION OF THE DRAWINGS

Various embodiments of the invention are disclosed in the following detailed description and the accompanying drawings.

Figure 1 is a block diagram illustrating an embodiment of a codec for scalable video coding.

Figure 2 is a block diagram illustrating an embodiment of a codec comprising a non-scalable video decoder configured to decode the base layer of a compatible scalable video stream.

Figure 3 is a block diagram illustrating an embodiment of a network gateway configured to route packets of video data based at least in part on whether a destination comprises a scalable or non-scalable decoder.

### DETAILED DESCRIPTION

The invention can be implemented in numerous ways, including as a process, an apparatus, a system, a composition of matter, a computer readable medium such as a computer readable storage medium or a computer network wherein program instructions are sent over optical or electronic communication links. In this specification, these implementations, or any other form that the invention may take, may be referred to as techniques. A component such as a processor or a memory described as being configured to perform a task includes both a general component that is temporarily configured to perform the task at a given time or a specific component that is manufactured to perform the task. In general, the order of the steps of disclosed processes may be altered within the scope of the invention.

A detailed description of one or more embodiments of the invention is provided below along with accompanying figures that illustrate the principles of the invention. The invention is described in connection with such embodiments, but the invention is not limited to any embodiment. The scope of the invention is limited only by the claims and the invention encompasses numerous alternatives, modifications and equivalents. Numerous specific details are set forth in the following description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

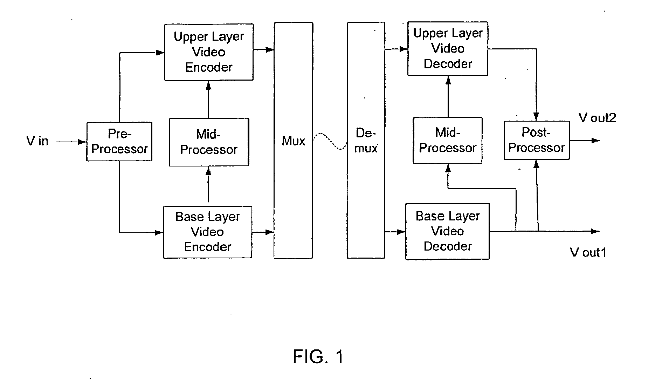

Figure 1 is a block diagram illustrating an embodiment of a codec for scalable video coding. In some embodiments, in a scalable video coding/multiplexing scheme the base layer is rendered compatible with a non-scalable video coding standard by assigning default values for the base layer to all necessary scalability parameters, e.g., priority id, dependency id, temporal level id, etc. For the base layer, a scalable decoder (e.g., the base layer decoder of Figure 1) is configured to use for the base layer the default values for the scalability parameters, instead of transmitted scalability parameters, making it unnecessary to transmit scalability parameters for base layer data. By this means, the base layer can adhere in all ways to the non-scalable standard, and it is not necessary to transmit any scalability parameters in the base layer data. The base layer data may be used by a non-scalable decoder directly, without having to strip, filter out, discard, ignore, or otherwise not use without being confused by transmitted scalability parameter data.

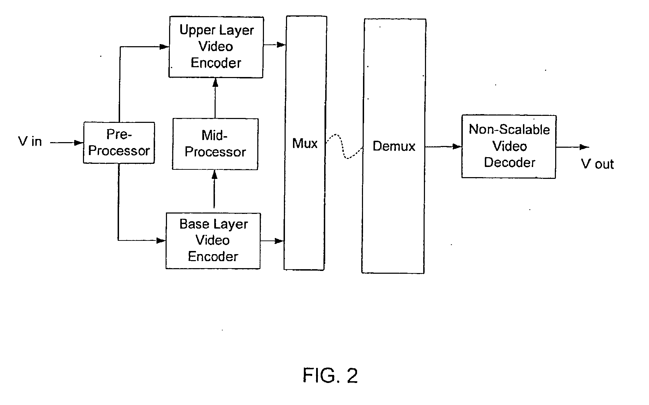

Figure 2 is a block diagram illustrating an embodiment of a codec comprising a non-scalable video decoder configured to decode the base layer of a compatible scalable video stream. In some embodiments, non-scalable video decoders, which have no knowledge of scalability, are enabled to ignore all scalable layers and only decode the base layer by tagging packets, called NAL units or NALUs in the H.264 video encoding standard, that are not associated with the base layer with values that non-scalable decoders know to discard. In some embodiments, non-scalable H.264 decoders, such as the non-scalable decoder of Figure 2, are configured to decode only NALUs having nal_unit_type syntax element values defined in the non-scalable H.264 standard and to ignore (e.g., discard without decoding or attempting to decode) NALUs having nal_unit_type syntax element values not defined in the non-scalable H.264 standard.

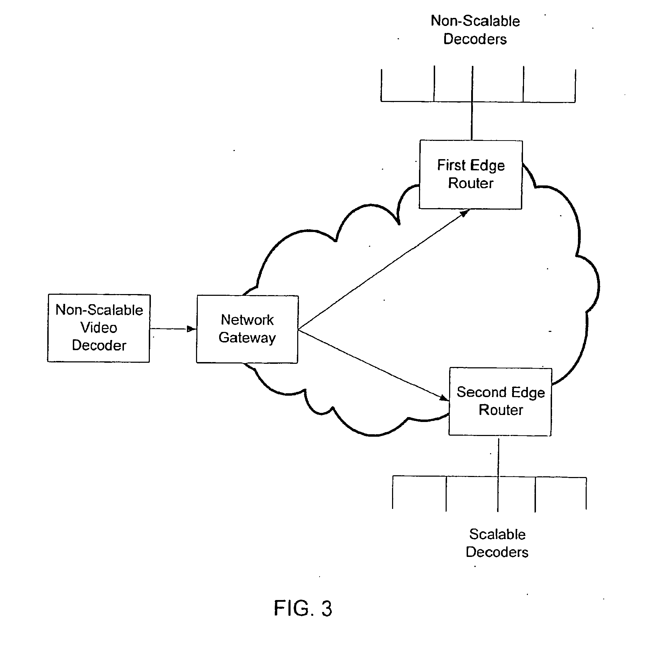

Figure 3 is a block diagram illustrating an embodiment of a network gateway configured to route packets of video data based at least in part on whether a destination comprises a scalable or non-scalable decoder. In some embodiments, a network gateway or other network node, such as the network gateway of Figure 3, is configured to route some NALUs to some destinations and other NALUs to other destinations. For example, if some destinations only contained non-scalable decoders (e.g., those associated with the first edge router of Figure 3), then in some embodiments the gateway or other node would route to them only NALUs having nal_unit_type syntax element values defined in the non-scalable H.264 standard. Using this approach, network resources and/or bandwidth are not used to send to non-scalable decoders NALUs not usable by such decoders.

In some scalable video streams there may be more than one layer that conforms to the non-scalable standard, and in such cases it is desirable to identify such layers to decoders and/or gateways.

Thus, in some embodiments, different default scalability parameters are assigned to each non-scalable layer according to certain characteristics of that non-scalable layer. For example, in H.264 the default scalability parameters could depend on the sequence parameter set or picture parameter set of the non-scalable layer. This enables the scalable decoder to utilize any of the non-scalable layers as its base layer.

In some embodiments, a special NALU is inserted just before some or all of the non-scalable video NALUs. This special NALU indicates that the following NALU belongs to a layer in the scalable hierarchy, but that it's coding is compatible with the non-scalable standard. This special NALU could also contain scalability data pertaining to the following compatible NALU, e.g., priority id, dependency id, temporal level id, etc.

A non-scalable video decoder would ignore the special NALU and select one of the available non-scalable layers to decode and display. For example, the selection could be on the basis of profile and level of the non-scalable layers, or picture size. Or it could be by some other selection mechanism contained, for example, in a file format such as mp4. A gateway could use data in the special NALU to make routing decisions, or it could use mechanisms similar to those above that a decoder would use.

In some embodiments, the video data conforming to the non-scalable standard is contained in scalable NALUs, but in a form that is easily extractable for use by a non-scalable decoder. For example, in some embodiments the scalability data is contained in the front of the scalable NALUs. A gateway or preprocessor strips off the scalability data, changes the nal_unit_type syntax element value to a non-scalable value, and sends the result to one or more non-scalable decoders.

In some embodiments, the video data conforming to the non-scalable standard is contained in scalable NALUs having special nal_unit_type syntax element values or other syntax element values that identify the video data as being coded in a non-scalable form. In various embodiments, scalability data is contained in the front of these NALUs or in another prescribed location in the NALUs. A gateway or preprocessor strips off the scalability data, changes the nal_unit_type syntax element to a non-scalable value, and sends the result to one or more non-scalable decoders.

In some scalable video streams there may be some layers that, by themselves, do not conform to the non-scalable standard, but when combined with other layers do conform. For purposes of clarity we call these layers subordinate non-scalable layers. For example, with temporal scalability the base layer may conform to the non-scalable standard, but the subordinate non-scalable layers, by themselves, do not. However, when the subordinate non-scalable layers are combined correctly with the base layer, the overall result does conform to the non-scalable standard and can be decoded by non-scalable decoders.

In some embodiments, the subordinate non-scalable layers are labeled so that they can be easily identified by scalable decoders, preprocessors and/or gateways. In some embodiments, this is done by inserting a special NALU before the subordinate non-scalable layer NALUs. These special NALUs have nal_unit_type syntax element values or other syntax element values that identify the subordinate non-scalable layers. The subordinate non-scalable layer NALUs have nal_unit_type syntax element values conforming to the non-scalable standard. A gateway may then use data in the special NALUs to make its routing decisions. It may send only the base layer to some non-scalable decoders, the base layer plus some or all subordinate non-scalable layers to other non-scalable decoders, and some or all layers to scalable decoders.
In some embodiments, the video data of the subordinate non-scalable layers is contained in scalable NALUs, but in a form that is easily extractable for use by non-scalable decoder. For example, in some embodiments the scalability data is contained in the front of the scalable NALUs. A gateway or preprocessor strips off the scalability data, changes the nal_unit_type syntax element value to a non-scalable value, and sends the result to non-scalable decoders.
Although the foregoing embodiments have been described in some detail for purposes of clarity of understanding, the invention is not limited to the details provided. There are many alternative ways of implementing the invention. The disclosed embodiments are illustrative and not restrictive.
Although the invention can be defined as stated in the attached claims, it is to be understood that the present invention can alternatively also be defined as stated in the following embodiments:
1. A method of encoding video data, comprising:
   receiving a video data; and
   encoding the video data in a manner that renders at least a base layer to be compatible with a non-scalable video encoding standard, including by assigning for at least the base layer default values to one or more scalability parameters.
2. A method as recited in embodiment 1, wherein the one or more scalability parameters include one or more of the following: priority id, dependency id, and temporal level id.
3. A method as recited in embodiment 1, wherein the non-scalable video encoding standard comprises the H.264 video encoding standard.
4. A method as recited in embodiment 1, further comprising configuring a scalable decoder to use for at least the base layer said default values for said one or more scalability parameters, instead of transmitted scalability parameters.
5. A method as recited in embodiment 1, wherein the encoded video data includes more than one layer that conforms to the non-scalable video encoding standard and further comprising assigning for each non-scalable layer, based at least in part on a characteristic of that non-scalable layer, a corresponding set of one or more default scalability parameter values.
6. A method as recited in embodiment 5, wherein the characteristic comprises one or more of the following: sequence parameter set and picture parameter set.
7. A method as recited in embodiment 5, further comprising including in the encoded video data an identification data that identifies those portions of the encoded video data that conform to the non-scalable video encoding standard.
8. A method as recited in embodiment 7, wherein including in the encoded video data an identification data comprises including in a stream of packets, in a position prior in transmission order to one or more packets associated with a scalable layer having coding that is compatible with the non-scalable video encoding standard, a special packet that identifies the one or more following packets as being associated with a scalable layer having coding that is compatible with the non-scalable video encoding standard.
9. A method as recited in embodiment 8, wherein the special packet includes for the one or more following packets with which the special packet is associated default values for one or more scalability parameters.
10. A method as recited in embodiment 8, further comprising configuring a non-scalable decoder to ignore the special packet and select a non-scalable layer to decode.
11. A method as recited in embodiment 10, wherein the selection is based at least in part on one or more of the following: profile and level of the non-scalable layers and picture size.
12. A method as recited in embodiment 8, further comprising configuring a forwarding node to make a forwarding decision based at least in part on the identification data.
13. A method as recited in embodiment 12, wherein the forwarding decision is made based at least in part on a capability of a downstream decoder to which the encoded video data or a portion thereof is to be forwarded.
14. A method as recited in embodiment 12, wherein the forwarding decision includes determining which portions of the encoded video data to forward.
15. A method of decoding video data, comprising:
   receiving an encoded video data; and
   decoding the encoded video data, including by using for at least a base layer default values for one or more scalability parameters.
16. A method of encoding video data, comprising:
   receiving a video data; and
   encoding the video data to produce an encoded video data that includes an identification data that identifies those portions of the encoded video data, if any, that are not associated with a base layer.
17. A method as recited in embodiment 16, wherein at least part of those portions of the encoded video data, if any, that are not associated with the base layer includes encoded video data associated with one or more scalable layers.
18. A method as recited in embodiment 16, wherein encoding the video data to produce an encoded video data that includes an identification data comprises including in a packet not associated with the base layer a packet type data not associated with the base layer.
19. A method as recited in embodiment 18, wherein the encoded video data comprises a series of NAL units and the packet type data not associated with the base layer comprises a nal_unit_type syntax element value not defined in the non-scalable H.264 standard.
20. A method as recited in embodiment 16, further comprising configuring a non-scalable decoder to ignore based at least in part on the identification data those portions of the encoded video data, if any, that are not associated with the base layer.
21. A method as recited in embodiment 16, further comprising configuring a distribution node to filter out of a stream of data being forwarded to a non-scalable decoder, based at least in part on the identification data, those portions of the encoded video data, if any, that are not associated with the base layer.
22. A method as recited in embodiment 21, wherein the non-scalable decoder comprises a first non-scalable decoder, which first non-scalable decoder is not configured to use the identification data to identify those portions of the encoded video data, if any, that are not associated with the base layer and the distribution node is further configured to not filter those portions of the encoded video data, if any, that are not associated with the base layer out of a second stream of data being forward to a second non-scalable decoder that is configured to use the identification data to identify those portions of the encoded video data, if any, that are not associated with the base layer.
23. A method as recited in embodiment 16, wherein encoding the video data to produce an encoded video data that includes an identification data that identifies those portions of the encoded video data, if any, that are not associated with the base layer comprises encoding the video data at a first node in a manner that produces an initial encoded video that includes one or more scalable layers in addition to the base layer and inserting the identification data at a second node configured to forward the encoded video data to one or more downstream decoders.
24. A method of processing encoded video data, comprising:
   receiving a packet that does not conform to a non-scalable video encoding standard but that contains a video data conforming to the non-scalable standard;
   extracting from the packet the video data conforming to the non-scalable standard; and
   providing the video data conforming to the non-scalable standard to a non-scalable decoder.
25. A method as recited in embodiment 24, wherein the packet comprises a scalable NAL unit.
26. A method as recited in embodiment 24, wherein the packet comprises scalability included in one or more defined portions of the packet.
27. A method as recited in embodiment 24, wherein extracting from the packet the video data conforming to the non-scalable standard comprises stripping a scalability data from the packet.
28. A method as recited in embodiment 27, wherein extracting from the packet the video data conforming to the non-scalable standard further comprises changing a nal_unit_type syntax element value to a non-scalable value.
29. A method as recited in embodiment 27, wherein providing the video data conforming to the non-scalable standard to a non-scalable decoder comprises forwarding the packet resulting from said stripping to said non-scalable decoder.
30. A method as recited in embodiment 24, wherein said extracting is performed by a pre-processor.
31. A method as recited in embodiment 24, wherein said extracting is performed by a gateway or other node configured to provide encoded video data to one or more remote destinations via a network and providing the video data conforming to the non-scalable standard to a non-scalable decoder comprises forwarding the video data conforming to the non-scalable standard to a remote destination associated with a non-scalable decoder.
32. A method as recited in embodiment 24, wherein the packet includes a packet type data that identifies the packet as comprising video data encoded in a non-scalable form.
33. A method of encoding video data, comprising:
   receiving a video data;
   encoding the video data to produce an encoded video data that includes a base layer that conforms to a non-scalable video encoding standard and one or more subordinate non-scalable layers, which subordinate non-scalable layers do not by themselves conform to the non-scalable video encoding standard but which can be combined with the base layer to produce a result that does conform to the non-scalable video encoding standard, such that the result can be decoded by a non-scalable decoder; and
   including in the encoded video data an identification data identifying those portions of the encoded video data that are associated with a subordinate non-scalable layer.
34. A method as recited in embodiment 33, wherein the identification data comprises a special NAL unit inserted before a NAL unit associated with a subordinate non-scalable layer.
35. A method as recited in embodiment 34, wherein the NAL unit associated with a subordinate non-scalable layer has a nal_unit_type syntax element value that conforms to the non-scalable video encoding standard.
36. A method as recited in embodiment 34, wherein the NAL unit associated with a subordinate non-scalable layer comprises a scalable NAL unit containing the video data of the subordinate non-scalable layer.
37. A method as recited in embodiment 36, further comprising configuring a forwarding node, pre-processor, or other entity to extract the video data of the subordinate non-scalable layer from the scalable NAL unit and provide the subordinate non-scalable layer to a non-scalable decoder.
38. A method as recited in embodiment 37, wherein extracting the video data of the subordinate non-scalable layer from the scalable NAL unit and providing the subordinate non-scalable layer to a non-scalable decoder comprises stripping scalability data from the scalable NAL unit and changing a first nal_unit_type syntax element value of the scalable NAL unit to a second nal_unit_type syntax element value that conforms to the non-scalable video encoding standard
39. A method as recited in embodiment 33, further comprising configuring a forwarding node to make a routing decision based at least in part on the identification data.
40. A method as recited in embodiment 39, wherein the forwarding node is configured to send only the base layer to a first destination associated with a first set of one or more non-scalable decoders and to send the base layer and one or more of said one or more subordinate non-scalable layers to a second destination associated with a second set of one or more non-scalable decoders.
41. A method of encoding video data, comprising:
   receiving a video data;
   encoding the video data to produce an encoded video data that includes more than one layer that conforms to a non-scalable video encoding standard; and
   including in the encoded video data an identification data comprises including in a stream of packets, in a position prior in transmission order to one or more packets associated with a scalable layer having coding that is compatible with the non-scalable video encoding standard, a special packet that identifies the one or more following packets as being associated with a scalable layer having coding that is compatible with the non-scalable video encoding standard.
42. A method as recited in embodiment 41, wherein the special packet includes one or more scalability parameter values associated with the one or more following packets.
43. A method as recited in embodiment 42, further comprising configuring a scalable decoder to use the one or more scalability parameter values to decode the one or more following packets.
44. A video encoding system, comprising:
   a communication interface configured to receive a video data; and
   a video encoder coupled to the communication interface and configured to encode the video data in a manner that renders at least a base layer to be compatible with a non-scalable video encoding standard, including by assigning for at least the base layer default values to one or more scalability parameters.
45. A system as recited in embodiment 44, wherein the one or more scalability parameters include one or more of the following: priority id, dependency id, and temporal level id.
46. A system as recited in embodiment 44, wherein the encoded video data includes more than one layer that conforms to the non-scalable video encoding standard and the video encoder is further configured to assign for each non-scalable layer, based at least in part on a characteristic of that non-scalable layer, a corresponding set of one or more default scalability parameter values.
47. A system as recited in embodiment 46, wherein the video encoder is further configured to include in the encoded video data an identification data that identifies those portions of the encoded video data that conform to the non-scalable video encoding standard.
48. A system as recited in embodiment 47, wherein the video encoder is configured to include the identification data in the encoded video data at least in part by including in a stream of packets, in a position prior in transmission order to one or more packets associated with a scalable layer having coding that is compatible with the non-scalable video encoding standard, a special packet that identifies the one or more following packets as being associated with a scalable layer having coding that is compatible with the non-scalable video encoding standard.
49. A system as recited in embodiment 48, wherein the special packet includes for the one or more following packets with which the special packet is associated default values for one or more scalability parameters.
50. A system as recited in embodiment 44, wherein the video encoder comprises a processor configured to execute computer instructions for encoding the video data.
51. A computer program product for encoding video data, the computer program product being embodied in a computer readable medium and comprising computer instructions for:
   receiving a video data; and
   encoding the video data in a manner that renders at least a base layer to be compatible with a non-scalable video encoding standard, including by assigning for at least the base layer default values to one or more scalability parameters.
52. A computer program product as recited in embodiment 51, wherein the encoded video data includes more than one layer that conforms to the non-scalable video encoding standard and further comprising computer instructions for assigning for each non-scalable layer, based at least in part on a characteristic of that non-scalable layer, a corresponding set of one or more default scalability parameter values.
53. A computer program product as recited in embodiment 52, further comprising computer instructions for including in the encoded video data an identification data that identifies those portions of the encoded video data that conform to the non-scalable video encoding standard.
54. A computer program product as recited in embodiment 53, wherein including in the encoded video data an identification data comprises including in a stream of packets, in a position prior in transmission order to one or more packets associated with a scalable layer having coding that is compatible with the non-scalable video encoding standard, a special packet that identifies the one or more following packets as being associated with a scalable layer having coding that is compatible with the non-scalable video encoding standard.
55. A video decoding system, comprising:
   a communication interface configured to receive an encoded video data; and
   a video decoder coupled to the communication interface and configured to decode the encoded video data, including by using for at least a base layer default values for one or more scalability parameters.
56. A computer program product for decoding encoded video data, the computer program product being embodied in a computer readable medium and comprising computer instructions for:
   receiving an encoded video data; and
   decoding the encoded video data, including by using for at least a base layer default values for one or more scalability parameters.
57. A video encoding system, comprising:
   a communication interface configured to receive a video data; and
   a video encoder coupled to the communication interface and configured to encode the video data to produce an encoded video data that includes a base layer that conforms to a non-scalable video encoding standard and one or more subordinate non-scalable layers, which subordinate non-scalable layers do not by themselves conform to the non-scalable video encoding standard but which can be combined with the base layer to produce a result that does conform to the non-scalable video encoding standard, such that the result can be decoded by a non-scalable decoder; and include in the encoded video data an identification data identifying those portions of the encoded video data that are associated with a subordinate non-scalable layer.
58. A system as recited in embodiment 57, wherein the identification data comprises a special NAL unit inserted before a NAL unit associated with a subordinate non-scalable layer.
59. A system as recited in embodiment 58, wherein the NAL unit associated with a subordinate non-scalable layer has a nal_unit_type syntax element value that conforms to the non-scalable video encoding standard.
60. A system as recited in embodiment 58, wherein the NAL unit associated with a subordinate non-scalable layer comprises a scalable NAL unit containing the video data of the subordinate non-scalable layer.
61. A computer program product for encoding video data, the computer program product being embodied in a computer readable medium and comprising computer instructions for:
   receiving a video data;
   encoding the video data to produce an encoded video data that includes a base layer that conforms to a non-scalable video encoding standard and one or more subordinate non-scalable layers, which subordinate non-scalable layers do not by themselves conform to the non-scalable video encoding standard but which can be combined with the base layer to produce a result that does conform to the non-scalable video encoding standard, such that the result can be decoded by a non-scalable decoder; and
   including in the encoded video data an identification data identifying those portions of the encoded video data that are associated with a subordinate non-scalable layer.
62. A computer program product as recited in embodiment 61, wherein the identification data comprises a special NAL unit inserted before a NAL unit associated with a subordinate non-scalable layer.
63. A computer program product as recited in embodiment 62, wherein the NAL unit associated with a subordinate non-scalable layer has a nal_unit_type syntax element value that conforms to the non-scalable video encoding standard.
64. A computer program product as recited in embodiment 62, wherein the NAL unit associated with a subordinate non-scalable layer comprises a scalable NAL unit containing the video data of the subordinate non-scalable layer.
65. A method of decoding encoded video data, comprising:
   receiving an encoded video data that includes

   (1) a base layer that conforms to a non-scalable video encoding standard and one or more subordinate non-scalable layers, which subordinate non-scalable layers do not by themselves conform to the non-scalable video encoding standard but which can be combined with the base layer to produce a result that does conform to the non-scalable video encoding standard, such that the result can be decoded by a non-scalable decoder; and
   (2) an identification data identifying those portions of the encoded video data that are associated with a subordinate non-scalable layer; and
   decoding the encoded video data, including by using the identification data to combine with the base layer one or more of said portions of the encoded video data that are associated with a subordinate non-scalable layer.
66. A video decoding system, comprising:
   a communication interface configured to receive an encoded video data that includes

   (1) a base layer that conforms to a non-scalable video encoding standard and one or more subordinate non-scalable layers, which subordinate non-scalable layers do not by themselves conform to the non-scalable video encoding standard but which can be combined with the base layer to produce a result that does conform to the non-scalable video encoding standard, such that the result can be decoded by a non-scalable decoder; and
   (2) an identification data identifying those portions of the encoded video data that are associated with a subordinate non-scalable layer; and
   a video decoder coupled to the communication interface and configured to decode the encoded video data, including by using the identification data to combine with the base layer one or more of said portions of the encoded video data that are associated with a subordinate non-scalable layer.
67. A computer program product for decoding encoded video data, the computer program product being embodied in a computer readable medium and comprising computer instructions for:
   receiving an encoded video data that includes

   (1) a base layer that conforms to a non-scalable video encoding standard and one or more subordinate non-scalable layers, which subordinate non-scalable layers do not by themselves conform to the non-scalable video encoding standard but which can be combined with the base layer to produce a result that does conform to the non-scalable video encoding standard, such that the result can be decoded by a non-scalable decoder; and
   (2) an identification data identifying those portions of the encoded video data that are associated with a subordinate non-scalable layer; and
   decoding the encoded video data, including by using the identification data to combine with the base layer one or more of said portions of the encoded video data that are associated with a subordinate non-scalable layer.

## Claims

1. A method of decoding video data, comprising:
receiving by a non-scalable video decoder a stream of packets including H.264 encoded video data;
reading one or more scalability parameters defining a base layer within the stream of packets;
selecting the base layer based upon the one or more scalability parameters;
filtering one or more scalable layers by the non-scalable video decoder; and
decoding the selected base layer by the non-scalable video decoder.

2. The method of claims 1, wherein the one or more scalability parameters are stored within a NAL unit preceding one or more additional NAL units.

3. The method of claim 1, wherein the one or more scalability parameters comprise default values associated with the base layer.

4. The method of claim 1, wherein the one or more additional NAL units are scalable NAL units.

5. A computer-readable storage medium storing instructions that, when executed by a processor, perform the steps of:
receiving by a non-scalable video decoder a stream of packets including H.264 encoded video data;
reading one or more scalability parameters defining a base layer within the stream of packets;
selecting the base layer based upon the one or more scalability parameters;
filtering one or more scalable layers by the non-scalable video decoder; and
decoding the selected base layer by the non-scalable video decoder.

6. The computer-readable storage medium of claims 5, wherein the one or more scalability parameters are stored within a NAL unit preceding one or more additional NAL units.

7. The computer-readable storage medium of claim 5, wherein the one or more scalability parameters comprise default values associated with the base layer.

8. The computer-readable storage medium of claim 5, wherein the one or more additional NAL units are scalable NAL units.

9. A video decoding system, comprising:
a communications interface configured to transmit a stream of packets including H.264 encoded video data; and
a non-scalable video decoder configured to:
receive the stream of packets including H.264 encoded video data;
read one or more scalability parameters defining a base layer within the stream of packets;
select the base layer based upon the one or more scalability parameters;
filter one or more scalable layers by the non-scalable video decoder; and
decode the selected base layer by the non-scalable video decoder.

10. The video decoding system of claims 9, wherein the one or more scalability parameters are stored within a NAL unit preceding one or more additional NAL units.

11. The video decoding system of claim 9, wherein the one or more scalability parameters comprise default values associated with the base layer.

12. The video decoding system of claim 9, wherein the one or more additional NAL units are scalable NAL units.
